# EUROPÄISCHE PATENTSCHRIFT

(11) **EP 0 651 004 B1**
(45) Veröffentlichungstag und Bekanntmachung des Hinweises auf die Patenterteilung: **22.01.2003**
(21) Anmeldenummer: 94116479.0
(22) Anmeldetag: 19.10.1994
(51) Int. Cl.: C08J 5/18, B32B 27/32, B29C 55/08

(54) **Biaxial orientierte Polyolefinfolie, Verfahren zu ihrer Herstellung und ihre Verwendung**
Biaxially oriented polyolefinfilm, process for its preparation and use
Feuille en polyoléfine etirée biaxialement, procédé pour sa préparation et utilisation

(30) Priorität: 27.10.1993 DE 4336560
(43) Veröffentlichungstag der Anmeldung: 03.05.1995
(73) Patentinhaber: Trespaphan GmbH, 66539 Neunkirchen (DE)
(72) Erfinder: Peiffer, Herbert, Dr., D-55126 Mainz (DE); Schlögl, Günter, Dr., D-65799 Kelkheim (DE)
(74) Vertreter: Luderschmidt, Schüler & Partner GbR

(56) Entgegenhaltungen:
- EP-A- 0 423 630
- EP-A- 0 538 746
- DE-A- 4 141 989
- US-A- 5 152 946
- DATABASE WPI Derwent Publications Ltd., London, GB; AN 93-231949 & JP-A-5 154 905 (TORAY) 22. Juni 1993

## Beschreibung

Die Erfindung betrifft ein Verfahren zum Herstellung einer biaxial orientierten Polyolefinfolie, die ein Propylenpolymer oder eine Polypropylenmischung enthält, sowie ihre Verwendung.

Biaxial orientierte Polyolefinfolien, wie beispielsweise Polypropylenfolien (boPP-Folien), werden bevorzugt im Verpackungsbereich eingesetzt. Für die Mehrzahl der Anwendungen ist dort eine Bedruckung der Folien erforderlich. Ihre Verarbeitung erfolgt auf vertikal oder horizontal arbeitenden Form- und Füllmaschinen und auf Einschlagautomaten. Die Verpackung wird üblicherweise durch Siegelung der Folienränder miteinander verschlossen. Im Verpackungsbereich werden derzeit etwa 80 % der hergestellten boPP-Folien verarbeitet.

Der restliche Anteil der boPP-Folien wird für technische Anwendungen, z.B. als Metallisier- oder Kaschierfolien, verwendet. Hier erfolgt die Verarbeitung der Folien in der Regel über schnellaufende Walzen.

In den letzten Jahren sind die Folienverarbeitungsmaschinen immer schneller und immer präziser geworden.

Beim Einschlag von Zigarettenpäckchen in boPP-Folien lagen vor zehn Jahren die Taktzahlen, mit denen die Päckchen eingeschlagen wurden, bei 200 bis 300 Päckchen pro Minute. Heute liegen die Taktzahlen dagegen bei ca. 350 bis 450 Päckchen pro Minute.

Bei der Kaschierung oder der Laminierung von boPP-Folien haben sich die Verarbeitungsgeschwindigkeiten in den letzten 10 Jahren nahezu verdoppelt.

Die Bedruckung der Folien erfolgt auf sehr präzise arbeitenden und sehr schnellaufenden Maschinen. Durch die Einführung neuer Techniken, z.B. die Lasergravierung, können heute wesentlich feinere Motive erzeugt werden, als dies früher, z.B. mittels der Hochdrucktechnik über Gummiwalzen, der Fall war.

Den höheren Verarbeitungsgeschwindigkeiten und der hohen Präzision, mit der heute die Einschlag- oder Kaschierautomaten arbeiten, müssen die Folieneigenschaften angepaßt werden. Bei den niedrigen Verarbeitungsgeschwindigkeiten vor etwa zehn Jahren reichte beispielsweise ein Gleitreibungskoeffizient der Folie von ca. 0,4 aus, um diese auf der Maschine verarbeiten zu können. Bei den heutigen Geschwindigkeiten muß der Reibungskoeffizient der Folie deutlich unter 0,3 liegen, damit die Folie einwandfrei auf der Maschine läuft. Ähnliches gilt für das Dickenprofil der Folie, an das heute weitaus höhere Anforderungen gestellt werden, als dies vor einigen Jahren noch der Fall gewesen ist. Für die Verarbeitung der Folien auf den schnellaufenden Zigaretteneinschlagautomaten ist es heute erforderlich, daß die relativen Dickenabweichungen der Folien in Längs- und in Querrichtung deutlich kleiner als 3 % sind.

Wesentlich für eine einwandfreie Verarbeitung ist, neben den angeführten Eigenschaften, daß die nach dem Verfahren hergestellte Folie hervorragende Planlageeigenschaften aufweist. Die Folie muß praktisch frei von Verdehnungen sein (Gauge bands), sie darf keine Durchhänge ausweisen und beim sogenannten Bowing, es handelt sich hierbei um bogenförmige Verwerfungen, dürfen bestimmte Werte nicht überschritten werden.

US 5,152,946 beschreibt ein Herstellverfahren für biaxial orientierte Polypropylenfolien, bei welchem unerwünschter Schrumpf vermindert werden soll. An Stelle der Thermofixierung soll eine Wärmebehandlung nach der biaxialen Verstreckung angewendet werden. Die Wärmebehandlung wird bei 45 bis 120°C durchgeführt. Die nach diesem modifizierten Verfahren hergestellte Folie hat einen geringeren Schrumpf als Folien, die nach dem bekannten Verfahren (Extrusion, Orientierung, Thermofixierung) hergestellt werden.

EP-A-0 538 746 beschreibt die Herstellung einer biaxial orientierten matten Polypropylenfolie. Die Folie wird extrudiert auf einer Abkühlwalze abgezogen, in Längsrichtung und in Querrichtung verstreckt und abschließend thermofixiert. Gegebenenfalls kann die Folie auf einer Oberfläche mittels Corona oder Flamme oberflächenbehandelt werden.

Aufgabe der Erfindung ist es ein Verfahren zur Herstellung einer biaxial verstreckten Polyolefinfolie zu Verfügung zu stellen, wobei die nach diesem Verfahren hergestellte Folie ausgezeichnete Planlageeigenschaften, insbesondere einen niedrigen Bowing-Wert besitzen soll.

Im Rahmen der Lösung dieser Aufgabe sollen auch Verwendungen der nach diesem Verfahren hergestellten Folien angegeben werden.

Erfindungsgemäß wird diese Aufgabe durch ein Verfahren zur Herstellung der biaxial orientierten Polyolefinfolie gelöst, wobei aus einer Breitschlitzdüse eine Vorfolie extrudiert, über zumindest eine Walze geführt und abgekühlt wird. Die Vorfolie wird nacheinander längs- und querverstreckt, thermofixiert und abgekühlt. Erfindungsgemäß wird die biaxial orientierte Folie nach der Thermofixierung und Abkühlung, aber vor dem Aufwickeln einer Wärmebehandlung derart unterzogen wird, daß ihre Temperatur höher als nach der Abkühlung ist und diese Wärmebehandlung mittels einer oder mehrerer beheizter Walzen erfolgt, an die die Polyolefinfolie angelegt wird.

Eine weitere Lösung der Aufgabe besteht darin, daß die Wärmebehandlung durch aufgeblasene, vorgewärmte Luft erfolgt.

Eine weitere Lösung der Aufgabe besteht darin, daß die Wärmebehandlung mittels IR-Strahlung vorgenommen wird.

Eine weitere Lösung der Aufgabe besteht darin, daß die Wärmebehandlung mittels einer Flammbehandlung erfolgt, bei welcher die Folie nach dem Abkühlen über eine beheizte Walze geführt wird und zugleich ihre von dem Walzenumfang weg gerichtete Oberfläche von einem Brennersystem auf die erforderliche Temperatur erwärmt wird.

Eine weitere Lösung der Aufgabe besteht darin, daß die Wärmebehandlung mittels einer zweiseitigen Vorbehandlung durch eine Coronaentladung vorgenommen wird.

Bei dem Polyolefin handelt es sich um ein Propylenpolymer, das zumindest 90 % Propylen enthält, und einen Schmelzpunkt höher als 140 °C besitzt.

In Ausgestaltung der Erfindung ist das Propylenpolymer aus der Gruppe isotaktische Propylenhomopolymere mit einem n-heptanlöslichen Anteil, Copolymere von Ethylen und Propylen, Copolymere von Propylen mit α-Olefinen ausgewählt. Die Polypropylenmischung ist insbesondere eine Mischung aus Propylenhomo- und/oder Copolymeren und/oder Polyolefinen mit 2 bis 6 C-Atomen, z.B. Polyethylen, insbesondere HDPE, LDPE und LLDPE. Dem Propylenpolymer oder der Polypropylenmischung sind zweckmäßigerweise anorganische und/oder organische Füllstoffe aus der Gruppe Aluminiumoxid, Aluminiumsulfat, Bariumsulfat, Calcium-, Magnesiumcarbonat, Silikate, Siliziumdioxid und/oder Titandioxid sowie Polyesterpolystyrole, Polyamide, halogenierte organische Polymere zugesetzt.

Der n-heptanlösliche Anteil beträgt üblicherweise weniger als 6 % des Propylenhomopolymers.

Bei den voranstehend angeführten Folien handelt es sich um Einschichtfolien, wie Elektroisolationsfolien, oder um Basisschichten von Mehrschichtfolien.

Bei der Polyolefinfolie kann es sich um eine Mehrschichtfolie aus einer Basisschicht und zumindest einer darauf angeordneten Deckschicht handeln, wobei
a) die Basisschicht ein Polypropylen-Homopolymer und gegebenenfalls Additive enthält,
b) die Deckschicht/en ein Copolymer aus Ethylen und Propylen oder Ethylen und Butylen oder Propylen und Butylen oder Ethylen und einem α-Olefin mit 5 bis 10 C-Atomen oder Propylen und einem α-Olefin mit 5 bis 10 C-Atomen oder ein Terpolymer aus Ethylen, Propylen und Butylen oder Ethylen, Propylen und einem α-Olefin mit 5 bis 10 C-Atomen oder eine Mischung aus zwei oder mehreren der genannten Copolymere und/oder Terpolymere und gegebenenfalls Additive enthält/enthalten und
c) die Mehrschicht-Polyolefinfolie einen Säbelbogen von 5 bis kleiner 10 mm aufweist.

Das Verfahren zur Herstellung einer derartigen biaxial orientierten Polyolefinfolie, die aus einer Breitschlitzdüse in Gestalt einer Vorfolie extrudiert, über zumindest eine Walze geführt und abgekühlt wird, nacheinander längs- und querverstreckt, thermofixiert und abgekühlt wird, zeichnet sich dadurch aus, daß die biaxial orientierte Folie nach der Thermofixierung und Kühlung, vor dem Aufwickeln, einer Wärmebehandlung derart unterzogen wird, daß ihre Temperatur höher als nach der Abkühlung ist. Hierzu wird die biaxial orientierte Polyolefinfolie nach der Querstreckung und dem Verlassen der Thermofixierzone auf eine Temperatur von kleiner/gleich 40 °C abgekühlt, und die nachfolgende Wärmebehandlung wird in einem Temperaturbereich von größer 40 °C bis 80 °C ausgeführt.

Unmittelbar nach der Wärmebehandlung wird die biaxial orientierte Polyolefinfolie auf eine Aufwickelwalze aufgewickelt und auf eine Temperatur von 10 bis 30 °C über eine Zeitspanne von 10 bis 72 Stunden abgekühlt.

Die Wärmebehandlung der biaxial orientierten Polyolefinfolie erfolgt mittels einer oder mehrerer beheizter Walzen, an die die Polyolefinfolie mit Hilfe von Anlegevorrichtungen, wie Luftmesser oder Nipwalzen, angelegt wird, durch aufgeblasene, vorgewärmte Luft, mittels IR-Strahlung, durch eine Flammbehandlung, bei der die Folie nach dem Abkühlen über eine beheizte Walze geführt und zugleich ihre von dem Walzenumfang weg gerichtete Oberfläche von einem Brennersystem auf die erforderliche Temperatur erwärmt wird oder zweiseitig durch eine Koronaentladung, wobei die Oberflächenspannung größer 37 mN/m ist und bis zu 45 mN/m beträgt.

Derart hergestellte Polyolefinfolien werden als bedruckte Verpackungsfolien, insbesondere als Verpackungsfolien für Zigarettenpäckchen, als unbedruckte/bedruckte Kaschierfolien, Elektroisolierfolien, aber auch als Schrumpffolien für Rumdumetiketten für zylinderförmiges Verpackungsgut, verwendet.

Mit der Erfindung wird der Vorteil erzielt, daß eine biaxial orientierte Polyolefinfolie bereitgestellt wird, bei der das Bowing - ausgedrückt durch die Größe des Säbelbogens - deutlich reduziert ist gegenüber dem Stand der Technik, wodurch die Planlageeigenschaften der Folie erheblich verbessert sind, so daß die präzise Bedruckbarkeit der Folie und die Verarbeitungsgeschwindigkeit auf Verpackungsautomaten, bei Einsatz der Folie als Einschlagfolie für Verpackungsgut, wie beispielsweise Zigarettenpäckchen, erheblich gesteigert werden können.

Die Erfindung wird im folgenden anhand der Zeichnungen näher erläutert. Es zeigen:
- Figuren 1 und 2: schematisch das Bowing von Folien, bestimmt nach zwei unterschiedlichen Methoden,
- Figur 3: eine Anordnung zur Wärmebehandlung einer biaxial orientierten Polyolefinfolie mittels beheizter Walze/n,
- Figur 4: eine Düsenanordnung zur Wärmebehandlung einer biaxial orientierten Polyolefinfolie mittels Heißluft,
- Figur 5: eine IR-Strahleranordnung zur Wärmebehandlung einer biaxial orientierten Polyolefinfolie,
- Figur 6: ein Brennersystem zur Flammbehandlung einer biaxial orientierten Polyolefinfolie, und
- Figur 7: eine Koronavorrichtung zur zweiseitigen Vorbehandlung einer biaxial orientierten Polyolefinfolie.

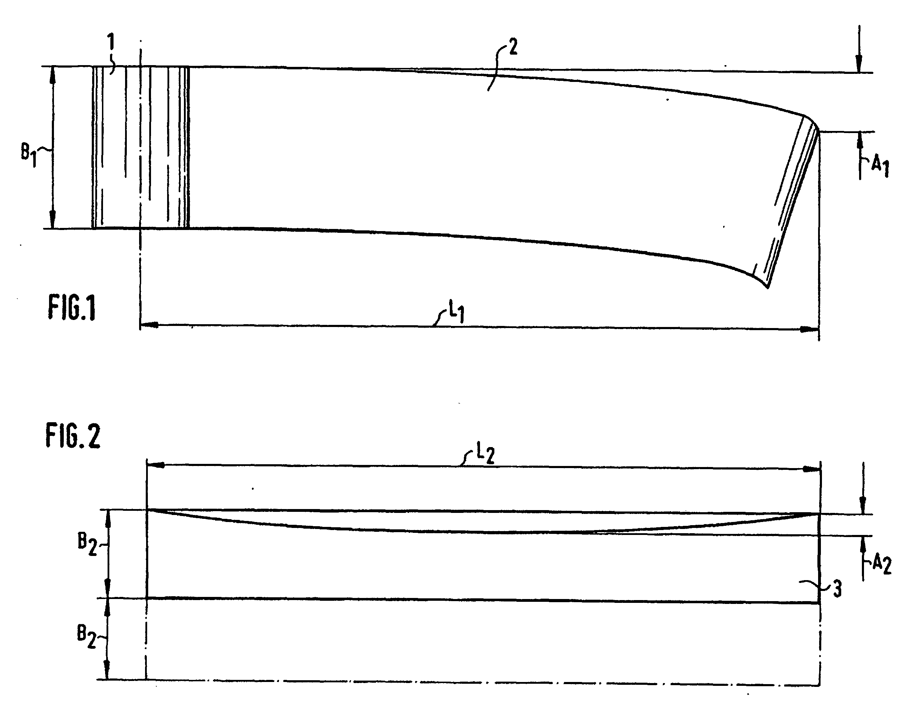

Das Bowing kann z.B. durch die Größe des sogenannten Säbelbogens der Folie quantitativ erfaßt werden. In den Figuren 1 und 2 sind zwei übliche Meßmethoden zur Bestimmung des Säbelbogens A dargestellt.

Bei der in Figur 1 dargestellten Methode wird eine Folie 2 von einer Folienrolle l der Breite Bₗ um die Länge L₁ abgewickelt. Es wird die Abweichung Aₗ zu der gedachten geraden Linie gemessen. Ein Maß für das Bowing ist die absolute Größe A₁ oder die relative Größe A₁/L₁. Die Standardlänge L₁ beträgt bei dieser Methode 4,0 m, während die Breite B1 kleiner/gleich 200 mm ist.

Bei der in Figur 2 dargestellten Methode wird ein Folienstück der Breite 2B₂ und der Länge L₂ um die Längsmittellinie auf die Breite B₂ so gefaltet, daß die Ecken aufeinander zu liegen kommen. Die gefaltete Folie 3 wird strammgezogen. Ist kein Bowing vorhanden, so legen sich alle vier Kanten deckungsgleich aufeinander. Im anderen Fall tritt die eine Längskante um das Maß A₂ zurück. Ein Maß für das Bowing ist wiederum die absolute Größe A₂ oder die relative Größe A₂/L₂. Das gefaltete Folienstück ist mit durchgehenden Linien und das ungefaltete Folienstück in der unteren Hälfte mit gestrichelten Linien dargestellt. Die Standardlänge L₂ beträgt bei dieser Methode 4,0 m, und die Breite 2 B2 ist größer als 200 mm.

Das Bowing bewirkt beim Drucken eine Abweichung im Druckbild oder bei der Kaschierung mit Papier oder Pappe Falten in der Folie. Beim Einschlag z.B. von Zigarettenpäckchen auf Zigaretteneinschlagautomaten bewirkt das Bowing ein Verschieben des Aufreißbandes, was zur Aussortierung des Päckchens führt. Außerdem bilden sich ungerade verlaufende Kanten, die undichte Siegelnähte zur Folge haben können. wie Untersuchungen bei der Kaschierung von BoPP-Folien gezeigt haben, gibt es bei einem Säbelbogen A von bereits 20 mm (gemessen nach der zweiten Methode) Schwierigkeiten beim gleichmäßigen Kleberauftrag, und damit Faltenbildung, was nicht akzeptiert werden kann.

Das Bowing ist eine Folge ungleichförmiger Orientierung der biaxial orientierten Folie über die Breite. Diese ungleichförmige Orientierung wird hauptsächlich bei der Querstreckung im sogenannten Tenterofen verursacht.

Bei der biaxialen Orientierung von Polypropylenfolie nach der Tentermethode wird üblicherweise die Folgestreckung angewendet. Bei diesem Prozeß wird das thermoplastische Material zunächst in einem Extruder aufgeschmolzen, in einer Düse zu einer Vorfolie ausgeformt und auf einer oder mehreren Walzen abgekühlt. Die ungestreckte Folie wird dann nacheinander längs- und quergestreckt, wobei üblicherweise die Längsstreckung vor der Querstreckung erfolgt. Nach der Querstreckung wird die Folie thermofixiert, abgekühlt, gegebenenfalls druckvorbehandelt und schließlich aufgewickelt.

Das Bowing der Folie kann auf der Folie beim Durchlaufen des Querstreckofens direkt sichtbar gemacht werden. Eine gerade Linie, die über die Breite der in den Ofen einlaufenden Folie auf die Folie aufgetragen wird, verformt sich während der Querstreckung zu einer über die Folienbreite gekrümmten Linie nach Verlassen des Ofens.

Das Bowing wird durch die an der Folie unterschiedlich angreifenden Kräfte und durch den gleichzeitig eintretenden Folienschrumpf initiiert. Besonders am Ende der Querstreckung beim Übergang in die Fixierung, wo die mechanischen Eigenschaften der Folie am kleinsten sind, kann durch die auf die Folie in Maschinenrichtung angreifenden Kräfte das Bowing ausgeprägt werden.

Mit den bisher bekannt gewordenen Ansätzen zur Reduzierung des Bowing ist es noch nicht gelungen, die oben beschriebenen Anforderungen zu erfüllen. So wird u.a. versucht, das Bowing der Folie durch Variation der Streckparameter und durch Änderung der Rahmengeometrie zu verringern (Journal of Applied Polymer Science, Vol. 48, S. 1399-1406, 1993, "An Attempt to Simulate the Bowing Phenomenon in Tenter", Verfasser: T. Yamada und Ch. Nonomura).

Bei den Polyolefinfolien handelt es sich im wesentlichen um ein Propylenpolymer oder eine Propylenmischung, der Füllstoffe in einer Menge von 0,1 bis 20 Gew.% zugesetzt sind.

Das Propylenpolymer enthält zum überwiegenden Teil zumindest 90 % Propylen und besitzt einen Schmelzpunkt von 140 °C oder höher, vorzugsweise 150 bis 170 °C. Isotaktisches Propylenhomopolymer mit einem n-heptanlöslichen Anteil von 6 Gew.% und weniger, bezogen auf das isotaktische Propylenhomopolymer, Copolymere von Ethylen und Propylen mit einem Ethylengehalt von 10 Gew.% oder weniger, Copolymere von Propylen mit C₄-C₈-α-Olefinen mit einem α-Olefingehalt von 10 Gew.% oder weniger stellen bevorzugte Propylenpolymere dar, wobei isotaktisches Propylenhomopolymer bevorzugt ist. Die angegebenen Gewichtsprozente beziehen sich auf das jeweilige Copolymer. Das Propylenpolymer hat im allgemeinen einen Schmelzflußindex von 0,5 g/10 min bis 8 g/10 min, insbesondere von 2 g/10 min bis 5 g/10 min, bei 230 °C und einer Kraft von 21,6 N (DIN 53 735). Desweiteren ist eine Mischung aus den genannten Propylenhomo- und/oder -copolymeren und/oder anderen Polyolefinen, insbesondere mit 2 bis 6 C-Atomen, geeignet, wobei die Mischung mindestens 50 Gew.%, insbesondere mindestens 75 Gew.%, Propylenpolymerisat enthält. Geeignete andere Polyolefine in der Polymermischung sind Polyethylene, insbesondere HDPE, LDPE und LLDPE, wobei der Anteil dieser Polyolefine jeweils 50 Gew.%, bezogen auf die Polymermischung, nicht übersteigt. Bei den Füllstoffen handelt es sich um die üblichen anorganischen und/oder organischen Materialien. Anorganische Füllstoffe sind Aluminiumoxid, Aluminiumsulfat, Bariumsulfat, Calciumcarbonat, Magnesiumcarbonat, Silikate, wie Aluminiumsilikat (Kaolinton) und Magnesiumsilikat (Talkum), Siliziumdioxid und/oder Titandioxid, worunter Calciumcarbonat, Siliziumdioxid, Titandioxid oder Mischungen hiervon bevorzugt eingesetzt werden.

Als organische Füllstoffe kommen die üblicherweise verwendeten Polymere in Frage, insbesondere solche wie Polyester, Polystyrole, Polyamide, halogenierte organische Polymere, wobei Polyester, wie beispielsweise Polybutylenterephthalate, bevorzugt sind.

Die Füllstoffmenge, insbesondere die des Calciumcarbonats CaCO₃, beträgt 1 bis 30 Gew.%, insbesondere 2 bis 15 Gew.%, bezogen auf das Gesamtgewicht der Folie. Die mittlere Teilchengröße, insbesondere die des Calciumcarbonats, liegt im Bereich von 1 bis 5 µm, insbesondere im Bereich von 1,5 bis 3 µm.

Die Dichte der Folie liegt im allgemeinen im Bereich von 0,5 bis 0,97 g/cm³.

Gegebenenfalls kann das Polypropylenpolymer durch den Zusatz von organischen Peroxiden teilabgebaut werden. Ein Maß für den Grad des Abbaus des Polymers ist der sogenannte Abbaufaktor A, der die relative Änderung des Schmelzflußindex nach DIN 53 735 des Polypropylens, bezogen auf das Ausgangspolymer, angibt. Im allgemeinen liegt der Abbaufaktor A des eingesetzten Polypropylenpolymers in einem Bereich von 3 bis 15, vorzugsweise 6 bis 10.

Als organische Peroxide sind die Alkylperoxide besonders geeignet, wobei unter einem Alkylrest die üblichen gesättigten, geradkettigen oder verzweigten niederen Alkylreste mit bis zu 6 C-Atomen verstanden werden. Insbesondere sind 2,5-Dimethyl-2,5-di(t-butylperoxy)-hexan oder Di-t-butylperoxid geeignet.

Die Polyolefinfolie kann gegebenenfalls ein niedermolekulares Harz enthalten, dessen Anteil 1 bis 30 Gew.%, vorzugsweise 2 bis 20 Gew.%, beträgt. Der Erweichungspunkt des Harzes liegt zwischen 80 und 160 °C, vorzugsweise zwischen 120 und 160 °C (gemessen nach DIN 1995-U4, entspricht ASTME E-28). Unter den niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmann's Enzyklopädie der Technischen Chemie, 4. Auflage, Band 12, Seiten 525 bis 555 beschrieben). Geeignete Erdölharze sind beispielsweise aus der EP-A - 0 180 087 bekannt, auf die hier ausdrücklich Bezug genommen wird.

Bei der biaxial orientierten Polyolefinfolie handelt es sich üblicherweise um eine Mehrschichtfolie, die aus einer Basisschicht und zumindest einer Deckschicht besteht, die auf der Basisschicht angeordnet ist. Im allgemeinen sind zumindest zwei Deckschichten vorgesehen, die in einem symmetrischen Aufbau die Basisschicht sandwichartig einschließen. Die auf der oder den Oberfläche/n der Basisschicht angeordnete/n Deckschicht/en besteht bzw. bestehen im wesentlichen aus einem Copolymer von Ethylen und Propylen oder Ethylen und Butylen oder Propylen und Butylen oder Ethylen und einem α-Olefin mit 5 bis 10 C-Atomen oder Propylen und einem α-Olefin mit 5 bis 10 C-Atomen oder aus einem Terpolymer von Ethylen, Propylen und Butylen oder Ethylen, Propylen und einem anderen α-Olefin mit 5 bis 10 C-Atomen oder aus einer Mischung aus zwei oder mehreren der genannten Copolymere und/oder Terpolymere, und gegebenenfalls zugesetzten Additiven. Das Propylenpolymer der Deckschicht kann mit dem der Basisschicht identisch sein, wenn eine nicht siegelfähige Deckschicht gewünscht ist.

Das Propylenpolymer bzw. die Polymermischung der Deckschicht/en hat einen Schmelzflußindex (DIN 53 735 bei 230 °C und 21,6 N Belastung) von 4 g/10 min bis 15 g/10 min, vorzugsweise von 5 g/10 min bis 12 g/10 min, wobei der Schmelzflußindex der Deckschicht/en höher liegt als jener des Propylenpolymer der Basisschicht.

Die Anzahl der Deckschichten richtet sich nach dem beabsichtigten Verwendungszweck der Folie. Im allgemeinen sind auf beiden Seiten der Basisschicht je eine Deckschicht aufgebracht, entsprechend einem Schichtaufbau ABA, wobei die Deckschichten A nach ihrem Aufbau und ihrer Zusammensetzung gleich oder verschieden sein können.

Die Dicke der Deckschicht/en liegt im allgemeinen im Bereich von 0,2 bis 3 µm, wobei beidseitige Deckschichten gleich oder verschieden dick sein können. Die Gesamtdicke der mehrschichtigen Polyolefinfolie kann innerhalb weiter Grenzen variieren und richtet sich nach dem beabsichtigten Einsatz. Sie beträgt beispielsweise 3 bis 120 µm, insbesondere 5 bis 100 µm, wobei die Basisschicht etwa 90 bis 95 % der Gesamtfoliendicke ausmacht.

Um bestimmte Eigenschaften der Polyolefinfolie zu verbessern, können sowohl die Basisschicht als auch die Deckschicht/en weitere Zusätze enthalten, vorzugsweise Antistatika und/oder Antiblockmittel und/oder Gleitmittel und/oder Stabilisatoren und/oder Neutralisationsmittel, die mit den Polymeren der Basisschicht und der Deckschicht/en verträglich sind. In diesem Zusammenhang wird ausdrücklich auf die in der DE-A - 41 41 989 beschriebenen weiteren Zusätze Bezug genommen, die auch bei der hier vorliegenden Polyolefinfolie eingesetzt werden.

Die Polyolefinfolie wird in bekannter Weise durch Extrusion bzw. Coextrusion hergestellt. Hierzu wird das in Granulatform vorliegende Polymer oder die Polymermischung der einzelnen Schichten in einem Extruder komprimiert und verflüssigt, wobei die Additive hinzugesetzt oder in den Ausgangsstoffen bereits enthalten sein können. Die Schmelzen werden dann gleichzeitig durch eine Breitschlitzdüse gepreßt und die extrudierte mehrschichtige Vorfolie auf einer oder mehreren Abzugswalzen abgezogen, wobei sie abkühlt und sich verfestigt. Anschließend wird die Folie längs und quer zur Extrusionsrichtung gestreckt, was zu einer Orientierung der Molekülketten führt. Die biaxial gestreckte Folie wird thermofixiert und anschließend aufgewickelt.

Die biaxiale Streckung bzw. Orientierung kann simultan oder die einzelnen Streckungen aufeinanderfolgend durchgeführt werden, indem zuerst längs, d.h. in Maschinenrichtung, und dann quer, d.h. senkrecht zur Maschinenrichtung, gestreckt wird. Das Längsstrecken erfolgt zweckmäßigerweise mit Hilfe zweier entsprechend dem angestrebten Streckverhältnis unterschiedlicher schnellaufender Walzen und das Querstrecken mit Hilfe eines Kluppenrahmens, der an den beiden Längskanten der Folie angreift.

Die Polyolefinfolie wird nach dem Verlassen der Querstreckzone bzw. des Querstreckofens und erfolgter Abkühlung unterhalb einer Temperatur von etwa 40 °C, vor der Aufwicklung, einer Wärmebehandlung in der Weise unterzogen, daß die aufgewickelte Folie auf der Aufwickelrolle eine erhöhte Temperatur im Bereich von über 40 °C bis ca. 80 °C aufweist. Im Anschluß an diese thermische Behandlung wird die Polyolefinfolie auf der Aufwickelrolle langsam abgekühlt, wobei bei Beginn der Abkühlung die Aufwickelrolle etwa die gleiche Temperatur wie die Folie während der Wärmebehandlung aufweist. Die Abkühlung der aufgewickelten Folie erfolgt während der Lagerung über eine Zeitspanne von 10 bis 72 h, wobei zur Erzielung des gewünschten Effekts auf das Bowing keine streng definierten Bedingungen eingehalten werden müssen. Maßgeblich für die Reduzierung des Bowing-Wertes ist offensichtlich die nochmalige Aufwärmung der Folie nach der Querverstreckung und das Halten der Temperatur über eine bestimmte Zeitspanne, die etwa, wie vorhin schon erwähnt wurde, 10 bis 72 h beträgt.

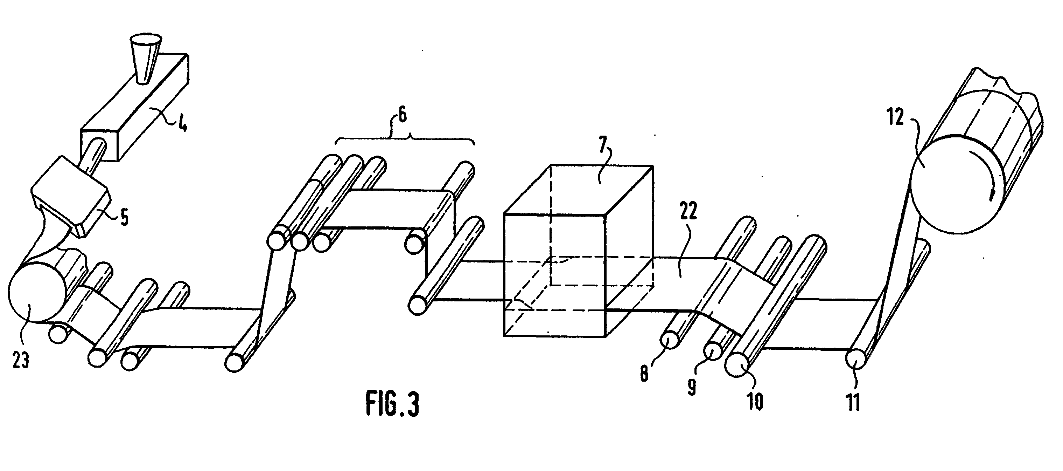

Die Wärmebehandlung der Folie kann dabei auf verschiedene Weise durchgeführt werden. Verschiedene Ausführungsformen der Anordnung für eine solche Wärmebehandlung werden nachstehend anhand der Figuren 3 bis 7 kurz erläutert.

In Figur 3 ist schematisch eine Verarbeitungsanlage für eine Folie 22 dargestellt, von der Extrusion der Folie bis zum Aufwickeln. In einen Extruder 4 wird das Granulat der Ausgangsstoffe der Folie eingefüllt. Dieses Granulat wird im Extruder aufgeschmolzen und einer Breitschlitzdüse 5 zugeführt, die durch Extrusion bzw. Coextrusion, falls es sich um eine Mehrschichtfolie handelt, ein Vorfolie erzeugt, die über eine Abzugs- und Kühlwalze 23 geführt wird. In einer Längsstreckung 6, die aus einer Anzahl von Walzen besteht, die mit unterschiedlichen Geschwindigkeiten umlaufen, erfolgt eine Orientierung der Folie in Längsrichtung, d.h. in Maschinenlaufrichtung. Anschließend gelangt die Folie in die Querstreck- und Thermofixierstation 7, in der sie quer zur Maschinenlaufrichtung gestreckt bzw. orientiert wird und zugleich die Ausrichtung der Molekülketten durch die Thermofixierung stabilisiert wird. Anschließend läuft die Folie 22 durch eine Kühlluftdusche und über eine oder mehrere Abkühlwalzen 8, auf denen sie auf eine Temperatur von 40 °C und darunter abgekühlt wird. In der anschließenden Wärmezone erfolgt die Aufheizung der Folie 22 mittels einer Aufheizwalze 10, an die die Folie durch eine geeignete Anlegevorrichtung, beispielsweise eine Nipwalze 9, angelegt wird. Das gezielte Anlegen der Folie 22 auf die Aufheizwalze 10 ist wegen der hohen Maschinenlaufgeschwindigkeit erforderlich. Als Anlegevorrichtung ist z.B. auch ein Luftmesser geeignet, das jedoch in Figur 3 nicht gezeigt ist. Anstelle einer einzigen Aufheizwalze 10 können auch zwei oder mehr Aufheizwalzen 10, je nach Bedarf, vorgesehen werden. In der Wärmezone wird die Folie 22 auf etwa 40 bis 80 °C erwärmt. Nach dem Verlassen der Wärmezone wird die Folie 22 um eine Umlenkwalze 11 geführt und gelangt auf eine angetriebene Aufwickelrolle 12.

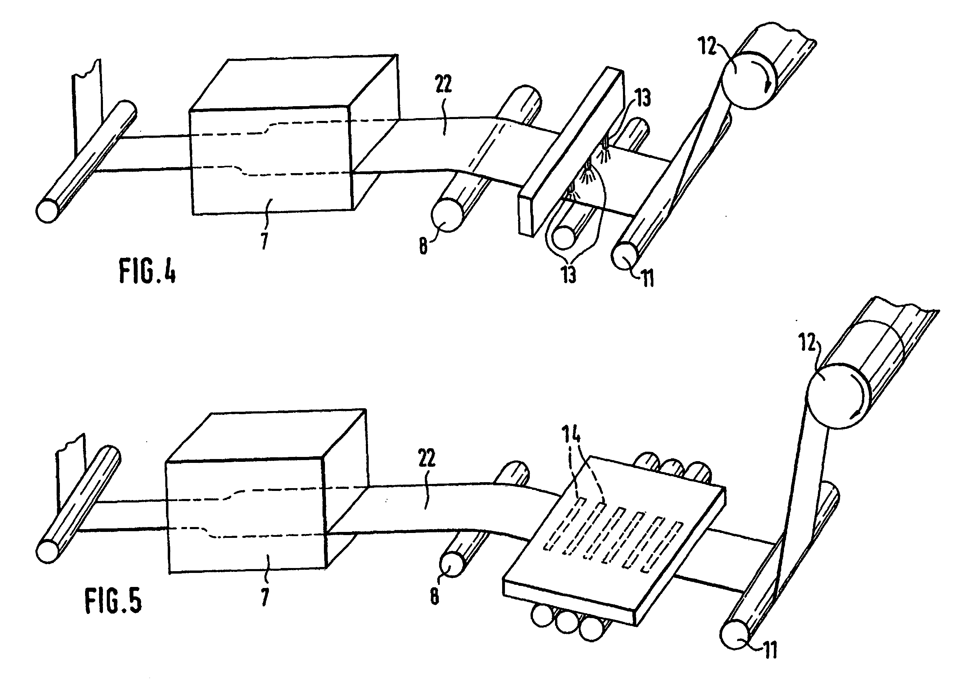

Die Verarbeitungsanlagen gemäß den Figuren 4 bis 7 besitzen einen weitgehend gleichen Aufbau wie die Verarbeitungsanlage nach Figur 3, und unterscheiden sich von dieser nur jeweils in der Wärmebehandlungsstation nach erfolgter Querstreckung, Thermofixierung und Abkühlung der Folie.

Bei der Verarbeitungsanlage gemäß Figur 4 erfolgt die Aufheizung der Folie 22 durch vorgewärmte Luft, die mittels geeigneter Düsen auf die Folie geblasen wird. Geeignete Düsen sind beispielsweise sogenannte Luftmesser. Die Folie 22 wird nach dem Verlassen der Querstreck- und Thermofixierstation 7 über die Abkühlwalze 8 geführt und gelangt dann anschließend in die Wärmebehandlungsstation, in der sie über eine Walze läuft, oberhalb der sich Luftdüsen 13 befinden. Es erfolgt hier wieder eine Erwärmung der auf eine Temperatur von weniger als 40 °C abgekühlten Folie 22 auf eine Temperatur im Bereich zwischen 40 und 80 °C. Nach dem Verlassen der Wärmebehandlungsstation wird die Folie 22 von einer Umlenkwalze 11 in Richtung der Aufwickelrolle 12 umgelenkt.

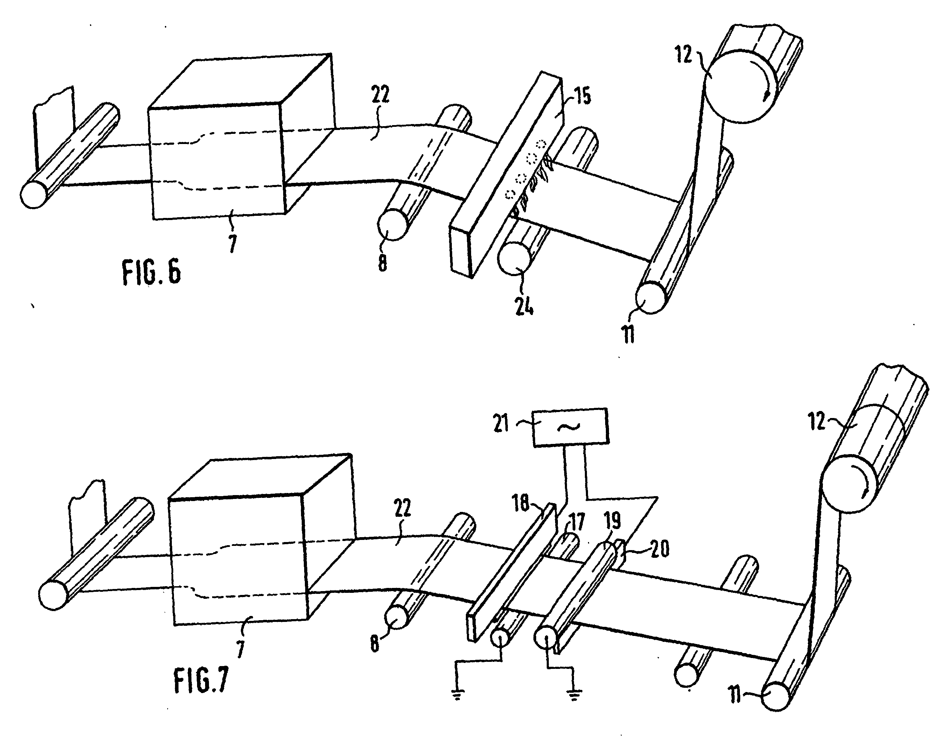

Die Wärmebehandlung der Folie 22 erfolgt in der Verarbeitungsanlage gemäß Figur 5, mit Hilfe von IR-Strahlern 14, die quer zur Folienbahn oberhalb von dieser angeordnet sind. Nach dem Austritt aus der Querstreck- und Thermofixierstation 7 läuft die Folie 22 über die Abkühlwalze 8 und gelangt in die Wärmebehandlungsstation, in der sie über Walzen geführt ist, oberhalb denen die IR-Strahler 14 angeordnet sind. Nach dem Verlassen der Wärmebehandlungsstation läuft die Folie 22 um die Umlenkwalze 11 herum, in Richtung Aufwickelrolle 12.

In Figur 6 ist schematisch die Aufheizung der Folie 22 mittels Flammheizung dargestellt. Hierbei läuft die Folie 22 nach dem Austritt aus der Querstreck- und Thermofixierstation 7 über die Abkühlwalze 8 und gelangt in die Wärmebehandlungsstation, die aus einer Walze 24 und einem darüber befindlichen Brennersystem 15 für die Flammbehandlung besteht. Bei der Flammbehandlung handelt es sich um eine bekannte Methode, wie sie beispielsweise in dem US-Patent 4,622,237 beschrieben ist. Die Walze 24 kann beheizt oder auch geringfügig gekühlt sein. Das Brennersystem 15 bringt die Folie 22 auf die gewünschte Temperatur im Bereich von 40 bis 80 °C.

Figur 7 zeigt eine Wärmebehandlungsstation, die aus zwei Koronavorrichtungen besteht. Die Wärmebehandlung der Folie 22 erfolgt durch Aufheizung mittels der Koronavorrichtung/en. Die Koronawärmebehandlung kann im allgemeinen nur bei sehr dünnen Folien und zweiseitiger Koronabehandlung zufriedenstellend arbeiten. Die Folie 22 wird nach dem Austritt aus der Querstreck- und Thermofixierstation 7 über die Abkühlwalze 8 geführt und gelangt auf eine Gegenwalze 17 der Koronavorrichtung. Die Gegenwalze 17 liegt auf Erdpotential. Oberhalb der Gegenwalze 17 befinden sich die Hochspannungselektroden 18, beispielsweise Leistenelektroden, wie sie in Figur 7 gezeigt sind, die in geringem Abstand voneinander parallel zueinander verlaufen. Anstelle von Leistenelektroden können die Hochspannungselektroden 18 auch aus Drahtelektroden bestehen. Die Hochspannungselektroden 18 ionisieren die Luft zwischen ihnen und der Oberseite der Folie 22. Die Hochspannungselektroden 18 sind mit einer Hochspannungsquelle 21 verbunden, die eine Wechselspannung von etwa 10000 Volt, bei einer Freuquenz von 10 kHz an die Hochspannungselektroden anlegt. Durch die Korona- bzw. Sprühentladung wird die Luft zwischen den Elektroden und der Folienoberfläche ionisiert und reagiert mit den Molekülen der Folienoberfläche, so daß polare Einlagerungen in der im wesentlichen unpolaren Polymermatrix entstehen, und darüber hinaus wird die Folie 22 auf eine Temperatur zwischen 40 und 80 °C erwärmt. Die Koronawärmebehandlung erfolgt in der Weise, daß die Oberflächenspannung der Folie größer 37 mN/m ist und bis etwa 45 mN/m beträgt.

Bei der zweiten Koronavorrichtung ist die Gegenwalze 19 oberhalb der Folie 22 angeordnet, während die Hochspannungselektroden 20 sich unterhalb der Folie 22 befinden. Die Gegenwalze 19 liegt auf Erdpotential, während die Hochspannungselektroden 20 mit der Hochspannungsquelle 21 verbunden sind.

Nach dem Verlassen der Koronavorrichtungen dieser Wärmebehandlungsstation wird die Folie 22 um die Umlenkwalze 11 herumgeführt und auf die Aufwickelrolle 12 aufgewickelt.

Die Wärmebehandlung der Folie 22 kann auch durch Kombination von zumindest zwei der voranstehend beschriebenen Wärmebehandlungsmethoden erfolgen.

Eine in der Verarbeitungsanlage nach den Figuren 3 bis 7 biaxial orientierte, thermisch behandelte Folie zeichnet sich durch einen sehr geringen Säbelbogen aus. Erfindungsgemäß liegt der Säbelbogen A unterhalb von 10 mm, gemessen nach der anhand von Figur 2 beschriebenen Methode.

Die Folien können siegelbar oder nicht siegelbar sein. Sie enthalten desweiteren die üblichen Additive, die sie für die Anwendung als Verpackungsfolien benötigen. Daneben werden die Folien in der Regel zumindest einseitig druckvorbehandelt, wobei bevorzugt die Flamm- oder die elektrische Koronabehandlung oder die Kombination aus beiden Behandlungen angewendet wird.

Die Erfindung wird im folgenden anhand eines Beispiels näher erläutert.

### Beispiel

Es wurde durch Koextrusion und durch anschließende stufenweise Orientierung in Längs- und in Querrichtung eine transparente dreischichtige Folie mit symmetrischem Aufbau mit einer Gesamtdicke von 20 µm hergestellt. Die Deckschichten hatten eine Dicke von jeweils 0,5 µm.

| A-Basisschicht | |
|---|---|
| 99,8 Gew.% | isotaktisches Polypropylen |
| 0,2 Gew.% | N,N-bis-ethoxyalkylamin und |
| | |

| B-Deckschichten | |
|---|---|
| 98,9 Gew.% | statistisches Ethylen-Propylen-Copolymer mit einem C₂-Gehalt von 4,5 Gew.% |
| 0,3 Gew.% | SiO₂ als Antiblockmittel mit einer mittleren Teilchengröße von 3 µm |
| 0,8 Gew.% | Polydimethylsiloxan mit einer Viskosität von 30000 mm²/s |

Die Herstellungsbedingungen in den einzelnen Verfahrensschritten sind:

| | | |
|---|---|---|
| Extrusion | Temperaturen: A-Schicht | 290 °C |
| | B-Schichten: | 280 °C |
| | Temperatur der Kühl- und Abzugswalze 23 | 20 °C |
| Längsstreckung | Temperatur | 130 °C |
| | Längsstreckverhältnis | 5,0 |
| Querstreckung | Temperatur | 160 °C |
| | Querstreckverhältnis | 10,0 |
| Fixierung | Temperatur | 110 °C |
| | Konvergenz | 20 % |
| Abkühlung der Folie 22 nach der Querstreckung auf | | 30 °C |

Aufheizung der Folie 22 auf 60 °C mittels einer beheizten verchromten Walze 10, die einen Durchmesser von 400 mm hat und bei der der Umschlingungswinkel 170 °C beträgt.

Aufwicklung der Folie 22 zu einer Rolle mit einer Breite von 4,70 m, wobei die Länge der aufgewickelten Folie 10000 m beträgt. Die mittlere Temperatur der Rolle betrug ca. 60 °C. Die Rolle wurde bei einer Temperatur von ca. 30 °C gelagert, wobei sie innerhalb von 24 h abgekühlt wurde.

Die Folie wurde in einem weiteren Schritt auf Kundenbreite konfektioniert, und es wurde der Säbelbogen A gemessen. Der Säbelbogen der erfindungsgemäßen Folie 22 nach der Methode gemäß Fig. 2 betrug 5 mm.

### Vergleichsbeispiel

Es wurde eine, von den Dickenverhältnissen, vom Folienaufbau und von den Verfahrensbedingungen, identische Folie zu derjenigen des Beispiels hergestellt.

Im Gegensatz zum Beispiel wurde die Folie nicht einer Wärmebhandlung nach der Querstreckung und Thermofixierung unterzogen.

Der Säbelbogen dieser Folie betrug 25 mm.

## Patentansprüche

1. Verfahren zur Herstellung einer biaxial orientierten Polyolefinfolie, die aus einer Breitschlitzdüse in Gestalt einer Vorfolie extrudiert, über zumindest eine Walze geführt und abgekühlt wird, nacheinander längs- und querverstreckt, thermofixiert und abgekühlt wird, **dadurch gekennzeichnet, daß** die biaxial orientierte Folie nach der Thermofixierung und Abkühlung, vor dem Aufwickeln einer Wärmebehandlung derart unterzogen wird, daß ihre Temperatur höher als nach der Abkühlung ist und diese Wärmebehandlung mittels einer oder mehrerer beheizter Walzen erfolgt, an die die Polyolefinfolie angelegt wird.

2. Verfahren zur Herstellung einer biaxial orientierten Polyolefinfolie, die aus einer Breitschlitzdüse in Gestalt einer Vorfolie extrudiert, über zumindest eine Walze geführt und abgekühlt wird, nacheinander längs- und querverstreckt, thermofixiert und abgekühlt wird, **dadurch gekennzeichnet, daß** die biaxial orientierte Folie nach der Thermofixierung und Abkühlung, vor dem Aufwickeln einer Wärmebehandlung derart unterzogen wird, daß ihre Temperatur höher als nach der Abkühlung ist und diese Wärmebehandlung durch aufgeblasene, vorgewärmte Luft erfolgt.

3. Verfahren zur Herstellung einer biaxial orientierten Polyolefinfolie, die aus einer Breitschlitzdüse in Gestalt einer Vorfolie extrudiert, über zumindest eine Walze geführt und abgekühlt wird, nacheinander längs- und querverstreckt, thermofixiert und abgekühlt wird, **dadurch gekennzeichnet, daß** die biaxial orientierte Folie nach der Thermofixierung und Abkühlung, vor dem Aufwickeln einer Wärmebehandlung derart unterzogen wird, daß ihre Temperatur höher als nach der Abkühlung ist und diese Wärmebehandlung mittels IR-Strahlung vorgenommen wird.

4. Verfahren zur Herstellung einer biaxial orientierten Polyolefinfolie, die aus einer Breitschlitzdüse in Gestalt einer Vorfolie extrudiert, über zumindest eine Walze geführt und abgekühlt wird, nacheinander längs- und querverstreckt, thermofixiert und abgekühlt wird, **dadurch gekennzeichnet, daß** die biaxial orientierte Folie nach der Thermofixierung und Abkühlung, vor dem Aufwickeln einer Wärmebehandlung derart unterzogen wird, daß ihre Temperatur höher als nach der Abkühlung ist und diese Wärmebehandlung mittels einer Flammbehandlung erfolgt, bei welcher die Folie nach dem Abkühlen über eine beheizte Walze geführt wird und zugleich ihre von dem Walzenumfang weg gerichtete Oberfläche von einem Brennersystem auf die erforderliche Temperatur erwärmt wird.

5. Verfahren zur Herstellung einer biaxial orientierten Polyolefinfolie, die aus einer Breitschlitzdüse in Gestalt einer Vorfolie extrudiert, über zumindest eine Walze geführt und abgekühlt wird, nacheinander längs- und querverstreckt, thermofixiert und abgekühlt wird, **dadurch gekennzeichnet, daß** die biaxial orientierte Folie nach der Thermofixierung und Abkühlung, vor dem Aufwickeln einer Wärmebehandlung derart unterzogen wird, daß ihre Temperatur höher als nach der Abkühlung ist und diese Wärmebehandlung mittels einer zweiseitigen Vorbehandlung durch eine Coronaentladung vorgenommen wird, wobei die Oberflächenspannung größer 37 mN/m ist und bis zu 45 mN/m beträgt.

6. Verfahren nach einem der Ansprüche 1 bis 5, **dadurch gekennzeichnet, daß** die biaxial verstreckte Polyolefinfolie nach der Querstreckung und dem Verlassen der Thermofixierzone auf eine Temperatur von kleiner/gleich 40°C abgekühlt wird und die nachfolgende Wärmebehandlung in einem Temperaturbereich von größer 40 bis 80°C ausgeführt wird.

7. Verfahren nach einem der Ansprüche 1 bis 5, **dadurch gekennzeichnet, daß** die biaxial verstreckte Polyolefinfolie nach der Wärmebehandlung auf eine Aufwickelwalze aufgewickelt wird und auf eine Temperatur von 10 bis 30°C über eine Zeitspanne von 10 bis 72 Stunden abgekühlt wird.

8. Biaxial orientierte Polyolefinfolie, hergestellt nach einem Verfahren nach einem der Ansprüche 1 bis 7, die ein Propylenpolymer oder eine Polypropylenmischung enthält, **dadurch gekennzeichnet, daß** der Säbelbogen der Polyolefinfolie kleiner als 10 mm ist, bezogen auf eine Länge von L = 4 m der Polyolefinfolie.

9. Biaxial orientierte Polyolefinfolie hergestellt nach einem Verfahren nach einem der Ansprüche 1 bis 7, **dadurch gekennzeichnet, daß** das Propylenpolymer zumindest 90 % Propylen enthält und einen Schmelzpunkt höher als 140 °C besitzt.

10. Biaxial orientierte Polyolefinfolie hergestellt nach einem Verfahren nach einem der Ansprüche 1 bis 7, **dadurch gekennzeichnet, daß** das Propylenpolymer aus der Gruppe isotaktische Propylenhomopolymere mit einem n-heptanlöslichen Anteil, Copolymere von Ethylen und Propylen, Copolymere von Propylen mit α-Olefinen ausgewählt ist.

11. Biaxial orientierte Polyolefinfolie hergestellt nach einem Verfahren nach einem der Ansprüche 1 bis 7, **dadurch gekennzeichnet, daß** die Polypropylenmischung eine Mischung aus Propylenhomound/oder -copolymeren und/oder Polyolefinen mit 2 bis 6 C-Atomen oder Polyethylenen, insbesondere HDPE, LDPE und LLDPE, ist.

12. Biaxial orientierte Polyolefinfolie hergestellt nach einem Verfahren nach einem der Ansprüche 1 bis 7, **dadurch gekennzeichnet, daß** anorganische und/oder organische Füllstoffe aus der Gruppe Aluminiumoxid, Aluminiumsulfat, Bariumsulfat, Ca-, Mg-Carbonat, Silikate, Siliziumdioxid und/oder Titandioxid sowie Polyester, Polystyrole, Polyamide, halogenierte organische Polymere zugesetzt sind.

13. Biaxial orientierte Polyolefinfolie hergestellt nach einem Verfahren nach einem der Ansprüche 1 bis 7, **dadurch gekennzeichnet, daß** sie eine Mehrschichtfolie aus einer Basisschicht und zumindest einer darauf angeordneten Deckschicht ist, wobei
a) die Basisschicht ein Polypropylen-Homopolymer und gegebenenfalls Additive enthält,
b) die Deckschicht/en ein Copolymer aus Ethylen und Propylen oder Ethylen und Butylen oder Propylen und Butylen oder Ethylen und ein α-Olefin mit 5 bis 10 Kohlenstoffatomen oder Propylen und ein α-Olefin mit 5 bis 10 Kohlenstoffatomen oder ein Terpolymer aus Ethylen, Propylen und Butylen oder Ethylen, Propylen und ein α-Olefin mit 5 bis 10 Kohlenstoffatomen oder eine Mischung aus zwei oder mehreren der genannten Copolymer und/oder Terpolymere und gegebenenfalls Additive enthält/enthalten und
c) die Mehrschicht-Polyolefinfolie einen Säbelbogen von 5 bis kleiner 10 mm aufweist.

14. Biaxial orientierte Polyolefinfolie hergestellt nach einem Verfahren nach einem der Ansprüche 1 bis 7, **dadurch gekennzeichnet, daß** die Mehrschicht-Polyolefinfolie eine transparente dreischichtige Folie symmetrischen Aufbaus ist.

15. Verwendung der biaxial orientierten Polyolefinfolie nach einem oder mehreren der Ansprüche 8 bis 14 als bedruckte Verpackungsfolie oder unbedruckte/bedruckte Kaschierfolie.

16. Verwendung der biaxial orientierten Polyolefinfolie nach einem oder mehreren der Ansprüche 8 bis 14 als Verpackungsfolie für Zigarettenpäckchen.

17. Verwendung der biaxial orientierten Polyolefinfolie gemäß einem oder mehreren der Anspräche 8 bis 14 als Schrumpffolie für Rundumetiketten für zylinderförmiges Verpackungsgut.

18. Verwendung der biaxial orientierten Polyolefinfolie gemäß einem oder mehreren der Ansprüche 8 bis 14 als Elektroisolierfolie.

## Claims

1. Method of producing a biaxially oriented polyolefin film which is extruded from a slot die in the form of a pre-film, passed over at least one roll and cooled, successively longitudinally and transversely stretched, thermoset and cooled, **characterised in that**, after thermosetting and cooling, the biaxially oriented film is, before being wound up, so subjected to a heat treatment that its temperature is higher than after cooling, and that heat treatment is carried out by means of one or more heated rolls against which the polyolefin film is laid.

2. Method of producing a biaxially oriented polyolefin film which is extruded from a slot die in the form of a pre-film, passed over at least one roll and cooled, successively longitudinally and transversely stretched, thermoset and cooled, **characterised in that**, after thermosetting and cooling, the biaxially oriented film is, before being wound up, so subjected to a heat treatment that its temperature is higher than after cooling, and that heat treatment is carried out by pre-heated air applied by blowing.

3. Method of producing a biaxially oriented polyolefin film which is extruded from a slot die in the form of a pre-film, passed over at least one roll and cooled, successively longitudinally and transversely stretched, thermoset and cooled, **characterised in that**, after thermosetting and cooling, the biaxially oriented film is, before being wound up, so subjected to a heat treatment that its temperature is higher than after cooling, and that heat treatment is performed by means of IR radiation.

4. Method of producing a biaxially oriented polyolefin film which is extruded from a slot die in the form of a pre-film, passed over at least one roll and cooled, successively longitudinally and transversely stretched, thermoset and cooled, **characterised in that**, after thermosetting and cooling, the biaxially oriented film is, before being wound up, so subjected to a heat treatment that its temperature is higher than after cooling, and that heat treatment is carried out by means of a flame treatment in which the film is, after cooling, passed over a heated roll and, at the same time, its surface remote from the periphery of the roll is heated to the necessary temperature by a burner system.

5. Method of producing a biaxially oriented polyolefin film which is extruded from a slot die in the form of a pre-film, passed over at least one roll and cooled, successively longitudinally and transversely stretched, thermoset and cooled, **characterised in that**, after thermosetting and cooling, the biaxially oriented film is, before being wound up, so subjected to a heat treatment that its temperature is higher than after cooling, and that heat treatment is performed by means of two-sided pre-treatment by a corona discharge, the surface tension being greater than 37 mN/m and up to 45 mN/m.

6. Method according to one of claims 1 to 5, **characterised in that** the biaxially stretched polyolefin film is, after the transverse stretching and after leaving the thermosetting zone, cooled to a temperature of less than or equal to 40°C, and the subsequent heat treatment is performed in a temperature range of greater than 40 to 80°C.

7. Method according to one of claims 1 to 5, **characterised in that** the biaxially stretched polyolefin film is, after the heat treatment, wound onto a winding roll and is cooled to a temperature of from 10 to 30°C over a time period of from 10 to 72 hours.

8. Biaxially oriented polyolefin film produced according to a method according to one of claims 1 to 7, comprising a propylene polymer or a polypropylene mixture, **characterised in that** the bowing of the polyolefin film is less than 10 mm, based on a length of L = 4 m of the polyolefin film.

9. Biaxially oriented polyolefin film produced according to a method according to one of claims 1 to 7, **characterised in that** the propylene polymer comprises at least 90 % propylene and has a melting point higher than 140°C.

10. Biaxially oriented polyolefin film produced according to a method according to one of claims 1 to 7, **characterised in that** the propylene polymer is selected from the group of isotactic propylene homopolymers having an n-heptane-soluble content, copolymers of ethylene and propylene, and copolymers of propylene with α-olefins.

11. Biaxially oriented polyolefin film produced according to a method according to one of claims 1 to 7, **characterised in that** the polypropylene mixture is a mixture of propylene homo- and/or co-polymers and/or polyolefins having from 2 to 6 carbon atoms or polyethylenes, especially HDPE, LDPE and LLDPE.

12. Biaxially oriented polyolefin film produced according to a method according to one of claims 1 to 7, **characterised in that** inorganic and/or organic fillers from the group aluminium oxide, aluminium sulphate, barium sulphate, calcium carbonate, magnesium carbonate, silicates, silicon dioxide and/or titanium dioxide and also polyesters, polystyrenes, polyamides and halogenated organic polymers are added.

13. Biaxially oriented polyolefin film produced according to a method according to one of claims 1 to 7, **characterised in that** it is a multilayer film comprising a base layer and at least one cover layer arranged thereon,
a) the base layer comprising a polypropylene homopolymer and, optionally, additives,
b) the cover layer(s) comprising a copolymer of ethylene and propylene, or ethylene and butylene, or propylene and butylene, or ethylene and an α-olefin having from 5 to 10 carbon atoms, or propylene and an α-olefin having from 5 to 10 carbon atoms, or a terpolymer of ethylene, propylene and butylene, or ethylene, propylene and an α-olefin having from 5 to 10 carbon atoms, or a mixture of two or more of the said copolymers and/or terpolymers, and, optionally, additives, and
c) the bowing of the multilayer polyolefin film is from 5 to less than 10 mm.

14. Biaxially oriented polyolefin film produced according to a method according to one of claims 1 to 7, **characterised in that** the multilayer polyolefin film is a transparent three-layer film of symmetrical structure.

15. Use of the biaxially oriented polyolefin film according to one or more of claims 8 to 14 as printed packaging film or unprinted/printed laminating film.

16. Use of the biaxially oriented polyolefin film according to one or more of claims 8 to 14 as packaging film for cigarette packs.

17. Use of the biaxially oriented polyolefin film according to one or more of claims 8 to 14 as shrink film for sleeve labels for cylindrical material being packaged.

18. Use of the biaxially oriented polyolefin film according to one or more of claims 8 to 14 as electrical insulating film.

## Revendications

1. Procédé pour la fabrication d'une feuille de polyoléfine soumise à une orientation biaxe, que l'on soumet à une extrusion sous la forme d'une feuille préformée à partir d'une filière pour feuille, que l'on guide par-dessus au moins un rouleau et que l'on refroidit, que l'on soumet successivement à un étirage en direction longitudinale et en direction transversale, à un thermofixage et à un refroidissement, **caractérisé en ce que** la feuille soumise à une orientation biaxe, après le thermofixage et le refroidissement, est soumise à un traitement thermique, avant l'enroulement, de telle sorte que sa température est supérieure à celle que l'on obtient après le refroidissement, et ce traitement thermique a lieu à l'aide d'un ou de plusieurs rouleaux chauffés contre lesquels on applique la feuille de polyoléfine.

2. Procédé pour la fabrication d'une feuille de polyoléfine soumise à une orientation biaxe, que l'on soumet à une extrusion sous la forme d'une feuille préformée à partir d'une filière pour feuille, que l'on guide par-dessus au moins un rouleau et que l'on refroidit, que l'on soumet successivement à un étirage en direction longitudinale et en direction transversale, à un thermofixage et à un refroidissement, **caractérisé en ce que** la feuille soumise à une orientation biaxe, après le thermofixage et le refroidissement, est soumise à un traitement thermique, avant l'enroulement, de telle sorte que sa température est supérieure à celle que l'on obtient après le refroidissement, et ce traitement thermique a lieu à l'aide d'air soufflé qui a été préchauffé.

3. Procédé pour la fabrication d'une feuille de polyoléfine soumise à une orientation biaxe, que l'on soumet à une extrusion sous la forme d'une feuille préformée à partir d'une filière pour feuille, que l'on guide par-dessus au moins un rouleau et que l'on refroidit, que l'on soumet successivement à un étirage en direction longitudinale et en direction transversale, à un thermofixage et à un refroidissement, **caractérisé en ce que** la feuille soumise à une orientation biaxe, après le thermofixage et le refroidissement, est soumise à un traitement thermique, avant l'enroulement, de telle sorte que sa température est supérieure à celle que l'on obtient après le refroidissement, et ce traitement thermique est mis en oeuvre à l'aide d'un rayonnement infrarouge.

4. Procédé pour la fabrication d'une feuille de polyoléfine soumise à une orientation biaxe, que l'on soumet à une extrusion sous la forme d'une feuille préformée à partir d'une filière pour feuille, que l'on guide par-dessus au moins un rouleau et que l'on refroidit, que l'on soumet successivement à un étirage en direction longitudinale et en direction transversale, à un thermofixage et à un refroidissement, **caractérisé en ce que** la feuille soumise à une orientation biaxe, après le thermofixage et le refroidissement, est soumise à un traitement thermique, avant l'enroulement, de telle sorte que sa température est supérieure à celle que l'on obtient après le refroidissement, et ce traitement thermique a lieu à l'aide d'un traitement à la flamme, dans lequel la feuille est guidée, après le refroidissement, par-dessus un rouleau chauffé et, dans le même temps, sa surface se détournant de la périphérie du rouleau, est chauffée via un système de brûleur jusqu'à la température requise.

5. Procédé pour la fabrication d'une feuille de polyoléfine soumise à une orientation biaxe, que l'on soumet à une extrusion sous la forme d'une feuille préformée à partir d'une filière pour feuille, que l'on guide par-dessus au moins un rouleau et que l'on refroidit, que l'on soumet successivement à un étirage en direction longitudinale et en direction transversale, à un thermofixage et à un refroidissement, **caractérisé en ce que** la feuille soumise à une orientation biaxe, après le thermofixage et le refroidissement, est soumise à un traitement thermique, avant l'enroulement, de telle sorte que sa température est supérieure à celle que l'on obtient après le refroidissement, et ce traitement thermique est mis en oeuvre, à l'aide d'un prétraitement des deux faces, via des effluves négatifs, la tension superficielle étant supérieure à 37 mN/m et s'élevant jusqu'à 45 mN/m.

6. Procédé selon l'une quelconque des revendications 1 à 5, **caractérisé en ce que** la feuille de polyoléfine soumise à un étirage biaxe, après l'étirage en direction transversale et après avoir quitté la zone de thermofixage, est refroidie à une température inférieure ou égale à 40 °C, et le traitement thermique ultérieur est mis en oeuvre dans une plage de température allant d'une température supérieure à 40 °C jusqu'à 80 °C.

7. Procédé selon l'une quelconque des revendications 1 à 5, **caractérisé en ce que** la feuille de polyoléfine soumise à un étirage biaxe est enroulée, après le traitement thermique, sur un rouleau d'enroulement et est refroidie à une température de 10 à 30 °C pendant un laps de temps de 10 à 72 heures.

8. Feuille de polyoléfine soumise à une orientation biaxe fabriquée conformément à un procédé selon l'une quelconque des revendications 1 à 7, qui contient un polymère de propylène ou un mélange de polymères de propylène, **caractérisée en ce que** la courbure en forme de lame de sabre de la feuille de polyoléfine est inférieure à 10 mm, rapportée à une longueur L = 4 m de la feuille de polyoléfine.

9. Feuille de polyoléfine soumise à une orientation biaxe fabriquée conformément à un procédé selon l'une quelconque des revendications 1 à 7, **caractérisée en ce que** le polymère de propylène contient du propylène à concurrence d'au moins 90 % et possède un point de fusion supérieur à 140 °C.

10. Feuille de polyoléfine soumise à une orientation biaxe fabriquée conformément à un procédé selon l'une quelconque des revendications 1 à 7, **caractérisée en ce que** le polymère de propylène est choisi parmi le groupe comprenant des homopolymères de propylène isotactique possédant une fraction soluble dans du n-heptane, des copolymères d'éthylène et de propylène, des copolymères de propylène avec des α-oléfines.

11. Feuille de polyoléfine soumise à une orientation biaxe fabriquée conformément à un procédé selon l'une quelconque des revendications 1 à 7, **caractérisée en ce que** le mélange de polymères de propylène est un mélange d'homopolymères et/ou de copolymères de propylène et/ou de polyoléfines contenant de 2 à 6 atomes de carbone ou encore de polyéthylènes, en particulier de HDPE, de LDPE ou de LLDPE.

12. Feuille de polyoléfine soumise à une orientation biaxe fabriquée conformément à un procédé selon l'une quelconque des revendications 1 à 7, **caractérisée en ce qu'**on ajoute des matières de charge inorganiques et/ou organiques choisies parmi le groupe comprenant de l'oxyde d'aluminium, du sulfate d'aluminium, du sulfate de baryum, du carbonate de calcium, du carbonate de magnésium, des silicates, du dioxyde de silicium et/ou du dioxyde de titane, ainsi que des polyesters, des polystyrènes, des polyamides, des polymères organiques halogénés.

13. Feuille de polyoléfine soumise à une orientation biaxe fabriquée conformément à un procédé selon l'une quelconque des revendications 1 à 7, **caractérisée en ce qu'**il s'agit d'une feuille multicouche constituée par une couche de base et par au moins une couche de recouvrement disposée par-dessus cette dernière, dans laquelle
a) la couche de base contient un homopolymère de polypropylène et, le cas échéant, des additifs,
b) la couche ou les couches de recouvrement contient ou contiennent un copolymère d'éthylène et de propylène ou d'éthylène et de butylène ou de propylène et de butylène ou encore d'éthylène et d'une α-oléfine contenant de 5 à 10 atomes de carbone ou de propylène et d'une α-oléfine contenant de 5 à 10 atomes de carbone ou bien un terpolymère d'éthylène, de propylène et de butylène ou d'éthylène, de propylène et d'une α-oléfine contenant de 5 à 10 atomes de carbone ou encore un mélange de deux des copolymères et/ou des terpolymères mentionnés au plus et, le cas échéant, des additifs, et
c) la feuille de polyoléfine multicouche présente une courbure en forme de lame de sabre dont la dimension s'étend de 5 à une valeur inférieure à 10 mm.

14. Feuille de polyoléfine soumise à une orientation biaxe fabriquée conformément à un procédé selon l'une quelconque des revendications 1 à 7, **caractérisée en ce que** la feuille de polyoléfine multicouche est une feuille transparente comprenant trois couches, de structure symétrique.

15. Utilisation de la feuille de polyoléfine soumise à une orientation biaxe, selon l'une ou plusieurs des revendications 8 à 14, à titre de feuille d'emballage imprimée ou de feuille de contrecollage non imprimée/imprimée.

16. Utilisation de la feuille de polyoléfine soumise à une orientation biaxe, selon l'une ou plusieurs des revendications 8 à 14, à titre de feuille d'emballage pour des paquets de cigarettes.

17. Utilisation de la feuille de polyoléfine soumise à une orientation biaxe, selon l'une ou plusieurs des revendications 8 à 14, à titre de feuille rétractable pour des étiquettes périphériques destinées à une matière à emballer de forme cylindrique.

18. Utilisation de la feuille de polyoléfine soumise à une orientation biaxe, selon l'une ou plusieurs des revendications 8 à 14, à titre de feuille diélectrique.
